# EUROPEAN PATENT APPLICATION

(11) **EP 1 293 902 A2**
(43) Date of publication of application: **19.03.2003**
(21) Application number: 02253008.3
(22) Date of filing: 29.04.2002
(51) Int. Cl.: G06F 9/50

(54) **Parallel computer system and method for assigning processor groups to the parallel computer system**

(30) Priority: 29.08.2001 JP 2001259800
(71) Applicant: Hitachi Ltd., Tokyo (JP)
(72) Inventor: Ioki, Nobuhiro, Hitachi Ltd, Intellectual Prop Gr., Tokyo 100-8220 (JP); Tanaka, Shinichi, Hitachi Ltd, Intellec. Prop. Gr., Tokyo 100-8220 (JP)
(74) Representative: Calderbank, Thomas Roger

(57) **Abstract**

Input information (102) including processor group division information (104) that is used to divide processors, which will be used in parallel calculation, into groups each of which will form a rectangular shape on a network and that is specified by information other than logical processor numbers is input to the processors of a parallel computer system. Each processor checks the received processor group division information to determine the logical processor numbers belonging to the groups. Communication among the determined possessors is done in a plurality of stages: intra-group communication processing (107) and inter-group communication processing (108). Because the processors forming a group are arranged in a rectangular shape on the network, intra-group communication processing may be executed with no network conflict.

## Description

The present invention relates to a parallel computer system and a method for dividing a plurality of processors of the parallel computer system into groups, and more particularly to a parallel computer system advantageously used for matrix calculation and a processor group assignment method that makes it possible to effectively communicate among processors included in the parallel computer system.

An example of known background arts for all-processor to all-processor communication of a parallel computer system is disclosed in JP-A-05-151181.

In the prior art described above, when a parallel computer system comprises N processors, all-processor to all-processor communication is accomplished in N-1 stages. The N-1 stage configuration is determined automatically and mechanically through program execution based on logical processor numbers. More specifically, the management table for managing communication patterns of each state is provided to manage the communication path of each stage. This table avoids a network conflict and therefore increases communication speed.

In the prior art described above, each processor of the parallel computer system stores into the management table the information about a processor to which data is to be sent in each of N-1 stages. During all-processor to all-processor communication, each processor references the management table in each stage of communication to determine a processor to which data is to be sent. When creating the management table described above, each processor considers the network configuration of the parallel computer system to avoid a network conflict. However, when network a conflict cannot be avoided, the operator must manually create the management table.

When the network configuration of a parallel computer network system is simple and at most ten or more processors are used in the parallel computer, the communication pattern management table may be created easily and therefore the prior art described above is effective. However, when a parallel computer system is configured as a complex network where communication paths are arranged just like a two-dimensional crossbar switch or when hundreds or thousands of processors are used in the parallel computer, the network paths become too complex to create a communication pattern management table that avoids a network conflict and therefore it is difficult for the prior art to avoid a network conflict.

The present invention seeks to provide a parallel computer system and a method for assigning processor groups to the parallel computer system that permits an operator to easily specify group division even when a parallel computer system has a network with complex communication paths or when a very large number of processors are used in parallel calculation, that allow each processor to identify a group intended by the operator, and that execute high-speed processor-to-processor communication while avoiding a network conflict.

According to the present invention, there may be provided by a parallel computer system comprising a plurality of processors connected via networks, each of the plurality of processors comprising means for receiving processor group division information as input information, the processor group division information being information on dividing the plurality of processors, which will be used in parallel processing, into a plurality of groups; communication processing means for processing communication among processors in the same group based on the received processor group division information; and communication processing means for processing communication among processors among different groups.

When dividing a plurality of processors into a plurality of groups as in the above description, the system according to the present invention does so while considering that a network conflict will not occur in each group. This allows all-processor to all-processor communication to be performed with no network conflict and therefore significantly reduces network conflicts in the whole system.

Other objects, features and advantages of the invention will become apparent from the following description of the embodiments of the invention taken in conjunction with the accompanying drawings.

### In the drawings:

FIG. 1 is a block diagram showing the configuration of a communication processor included in each processor of a parallel computer system in an embodiment of the present invention.

FIG. 2 is a block diagram showing the configuration of an embodiment of the parallel computer system according to the present invention.

FIG. 3 is a diagram showing an example of submatrix data that is an example of input data.

FIG. 4 is a diagram showing processor group division.

FIG. 5 is a diagram showing processor group division information.

FIG. 6 is a flowchart illustrating the processing operation of a by-group processor-counting unit shown in FIG. 1.

FIG. 7 is a flowchart illustrating the processing operation of a logical processor number acquisition unit.

FIGS. 8A, 8B, and 8C are diagrams showing the processing of an intra-group communication processor shown in FIG. 1.

FIG. 9 is a diagram showing an inter-group communication processor, shown in FIG. 1, that exchanges data among groups after completion of intra-group communication processing.

FIG. 10 is a diagram showing processor-basis data transfer processing in the first stage of inter-group communication in an inter-group communication processor.

FIG. 11 is a diagram showing processor-basis data transfer processing in the second stage of inter-group communication in the inter-group communication processor.

FIG. 12 is a diagram showing the sub-matrixes of a transposed matrix distributed to the processors in a parallel computer system to which a processing result is output.

FIG. 13 is a block diagram showing the configuration of another embodiment of a parallel computer system according to the present invention.

FIG. 14 is a diagram showing processor group division information in the embodiment shown in FIG. 13.

FIG. 15 is a diagram showing a processor group division table in the embodiment shown in FIG. 13.

Some embodiments of a parallel computer system and a method for assigning processor groups according to the present invention will be described in detail with reference to the drawings.

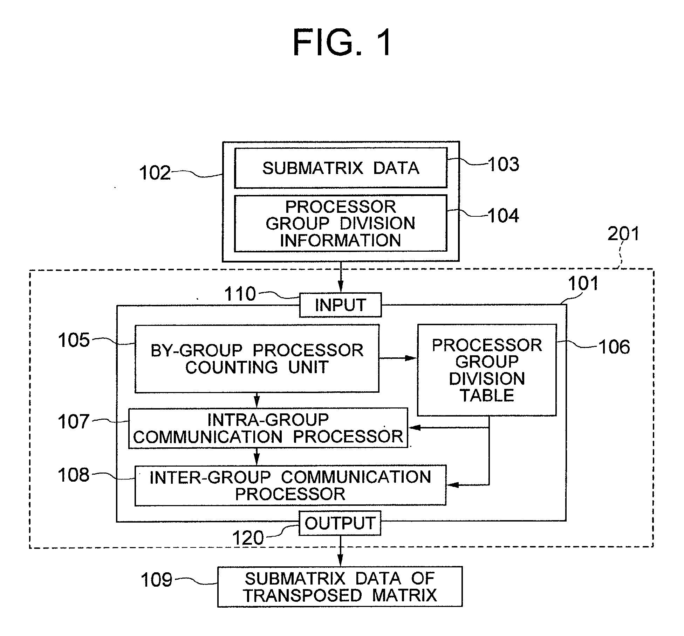

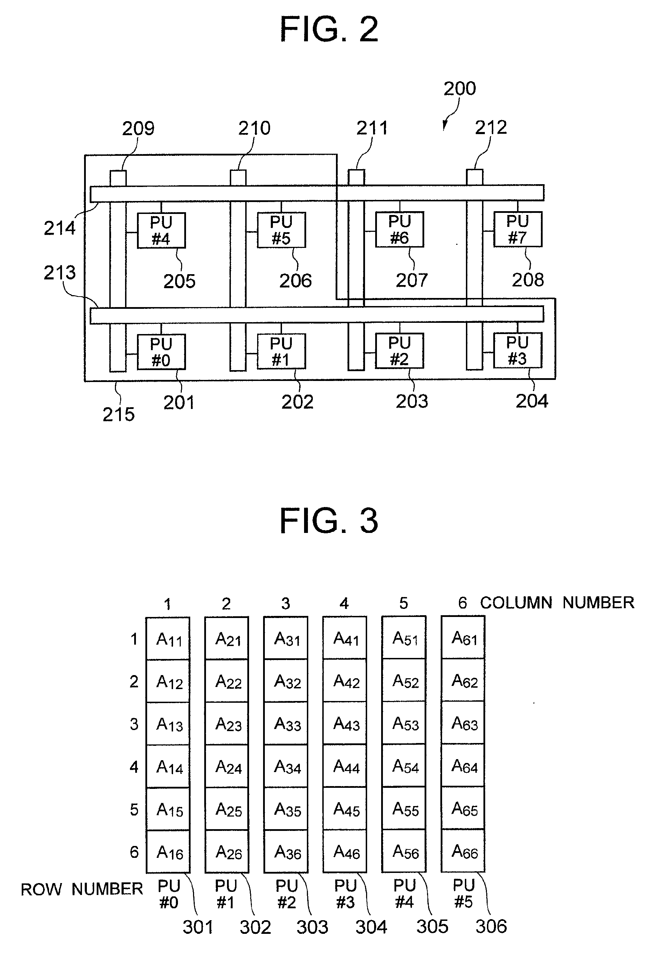

FIG. 1 is a block diagram showing the configuration of a communication processor included in each processor of a parallel computer system in an embodiment of the present invention (a processor 201 in FIG. 2 is shown as a representative processor), and FIG. 2 is a block diagram showing the configuration of an embodiment of the parallel computer system according to the present invention. Referring to FIGS. 1 and 2, the number 101 indicates a communication processing unit (hereinafter called a communication processor) that can perform communication with all processors, and the number 102 indicates input information, which is input to the processor, including submatrix data 103 on which the processor is to perform calculation and processor group division information 104 specified by an operator. The number 105 indicates a by-group processor counting unit, the number 106 indicates a processor group division table, the number 107 indicates an intra-group communication processor, the number 108 indicates an inter-group communication processor, and the number 109 indicates the submatrix data of a transposed matrix that is output by the processor as a calculation result.

Referring to FIG. 2, the numbers 201-208 indicate processors PU#0-PU#7 of the parallel computer system, the numbers 209-212 indicate an X-axis network, and the numbers 213 and 214 indicate a Y-axis network. As shown in FIG. 2, processors PU#0-PU#7 are arranged as a matrix by the X-axis and Y-axis networks.

In the embodiment of the present invention described below, an example is used in which the submatrix data of matrix data is input to all or some processors of the parallel computer system to do matrix transposition processing while communicating data among processors. In addition, in the embodiment of the present invention, the operator creates processor group division information, which is information indicating a plurality of groups each including one or more processors to be used in parallel calculation, without specifying processor numbers. Based on the created processor group division information, each processor determines which group the processor belongs to. Then, the plurality of processors execute all-processor to all-processor communication processing in two stages: intra-group communication processing and inter-group communication processing. When dividing the plurality of processors into a plurality of groups, the operator divides them so that a network conflict will not occur in each group. The operator's intension is communicated accurately to the plurality of processors via the processor group division information.

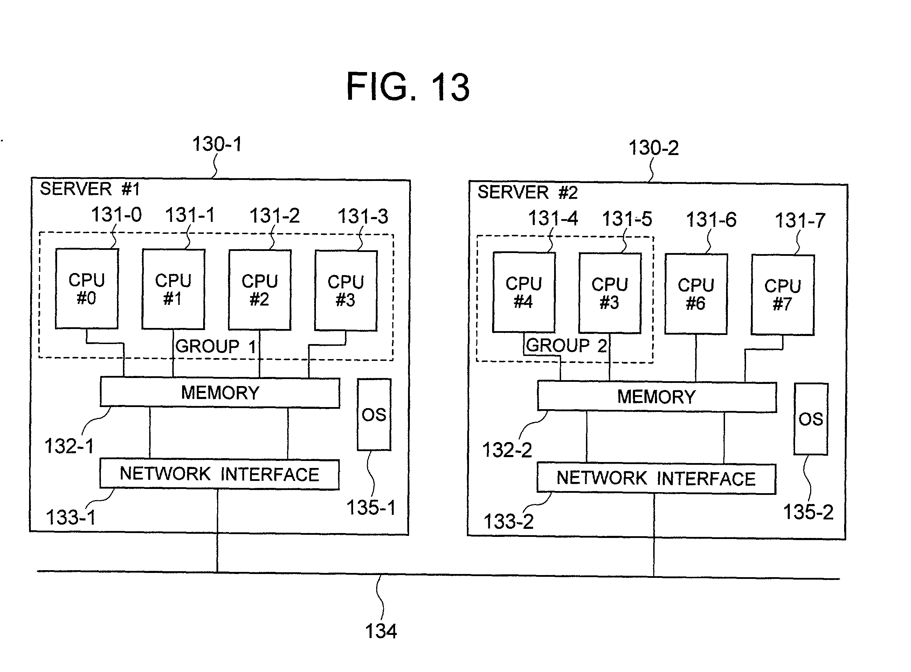

A processor included in the parallel computer system in one embodiment of the present invention comprises the communication processor 101, such as the one shown in FIG. 1, that communicates with other processors and a known operation unit that has the configuration of a server, shown in FIG. 13, that combines a plurality of CPUs into one. And, based on operator-entered submatrix data and processor group division information composed of the plurality of processors divided into the plurality of groups for use in parallel calculation, the communication processor 101 divides the all-processor to all-processor communication into stages and creates a communication stage management table that manages stage division information. After that, the processor communicates with other processors in the same group according to the information on the communication stages stored in the communication stage management table. Then, the processor performs communication processing across processor groups. The all-processor to all-processor communication processing may be created as a processing program that may be stored on a recording medium such as a hard disk, DAT, floppy disk, and CD-ROM.

The communication processor 101 shown in FIG. 1 comprises the counting unit 105 that counts the number of processors of each group, the processor group division table 106, the intra-group communication processor 107, and the inter-group communication processor 108. From an input unit 110, the operator enters as the input information 102 the submatrix data 103, which is created by dividing and arranging matrix data into multiple units for processing by the processors in the parallel computer system, and the processor group division information 104 indicating the division of a plurality of processors into a plurality of groups.

The by-group processor counting unit 105 checks the entered processor group division information 104 to find the number of processors belonging to each group and the logical processor numbers of the processors belonging to each group and stores them into the processor group division table 106. The intra-group communication processor 107 uses the number of processors and the logical processor numbers of each group, which are stored in the processor group division table 106, to process processor-to-processor communication within each group. The inter-group communication processor 108 uses the number of processors and the logical processor numbers of each group, which are stored in the processor group division table 106, to process processor-to-processor communication across groups. The output information 109 output from an output unit 120 as a result of all-processor to all-processor communication is the submatrix data of the transposed matrix of the entered submatrix.

The parallel computer system according to the present invention comprises eight logical processors, PU#0-PU#7, with logical processor numbers #0-#7 as shown in FIG. 2. Those processors are connected by the X-axis networks 209-212 composed of four communication paths and the Y-axis network 213 and 214 composed of two communication paths. The processors, each with an independent memory, communicate over the networks to exchange data among them. In the embodiment of the present invention described below, six processors PU#0-PU#5 are used to configure a parallel computer system 215. Although a parallel computer system 200 shown in FIG. 2 comprises eight processors, any number of processors may be used to build the system. A very large number of processors, for example, several hundreds or thousands of processors, may be used to build the system.

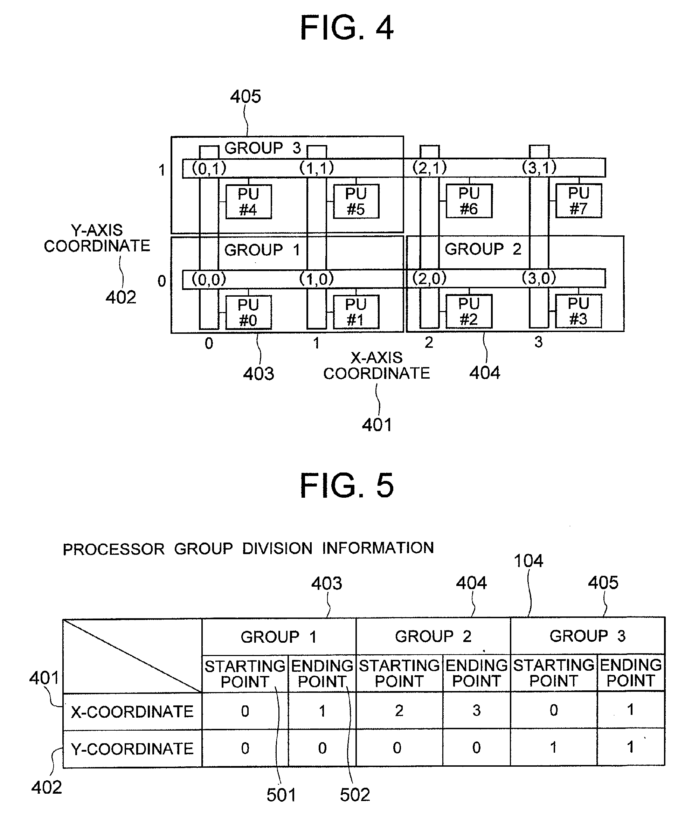

FIG. 3 is a diagram showing an example of the submatrix data 103 that is one of input data, FIG. 4 is a diagram showing the group division of processors, and FIG. 5 is a diagram showing processor group division information.

Assume that there is a 6 x 6 matrix such as the one shown in FIG. 3 and that six processors are used to perform matrix transposition processing. To do this processing, an example of submatrix data 301-306 is shown in FIG. 3 where 6 x 6 matrix data is distributed among six processors PU#0-PU#5. In the example shown, the first-column matrix data 301 is set in PU#0, the second-column matrix data 302 is set in PU#1, the third-column matrix data 303 is set in PU#2, the fourth-column matrix data 304 is set in PU#3, the fifth-column matrix data 305 is set in PU#4, and the sixth-column matrix data 306 is set in PU#5.

In this example, the operator divides the processors into groups as shown in FIG. 4. In this example, the processors along the Y-axis network shown in FIG. 2 are divided into groups each composed of two processors. That is, in the example shown in the figure, the processors are divided into groups by an X-axis coordinate 401 and a Y-axis coordinate 402 such that the three groups 403, 404, and 405 are each configured as a rectangle. In this specification, the term "rectangle" means that a plurality of processors are arranged in the network not in the L-shaped or U-shaped configuration but in the straight line configuration. In this way, processors PU#0 and PU#1 are assigned to group 403, processors PU#2 and PU#3 are assigned to group 404, and processors PU#4 and PU#5 are assigned to group 405.

FIG. 5 shows an example of the processor group division information 104, one of inputs entered by the operator when he or she divides the processors into groups as described above. As shown in FIG. 5, the processor group division information 104 contains the starting points 501 and the ending points 502 of the X-axis coordinate 401 and the Y-axis coordinate 402 of each group. That is, when specifying a processor group, the operator does not directly specify the logical processor numbers but specifies the coordinates of the range of the group. This is especially useful when there are many processors, for example, when there are hundreds of processors. In this example, the starting point 501 of the X-axis coordinate 401 of the processor group 403 indicated as group 1 is 0, and the ending point 502 is 1. The starting point 501 of the Y-axis coordinate 402 is 0, and the ending point 502 is 0. The starting point 501 of the X-axis coordinate 401 of the processor group 404 indicated as group 2 is 2, and the ending point 502 is 3. The starting point 501 of the Y-axis coordinate 402 is 0, and the ending point 502 is 0. Further more, the starting point 501 of the X-axis coordinate 401 of the processor group 405 indicated as group 3 is 0, and the ending point 502 is 1. The starting point 501 of the Y-axis coordinate 402 is 1, and the ending point 502 is 1.

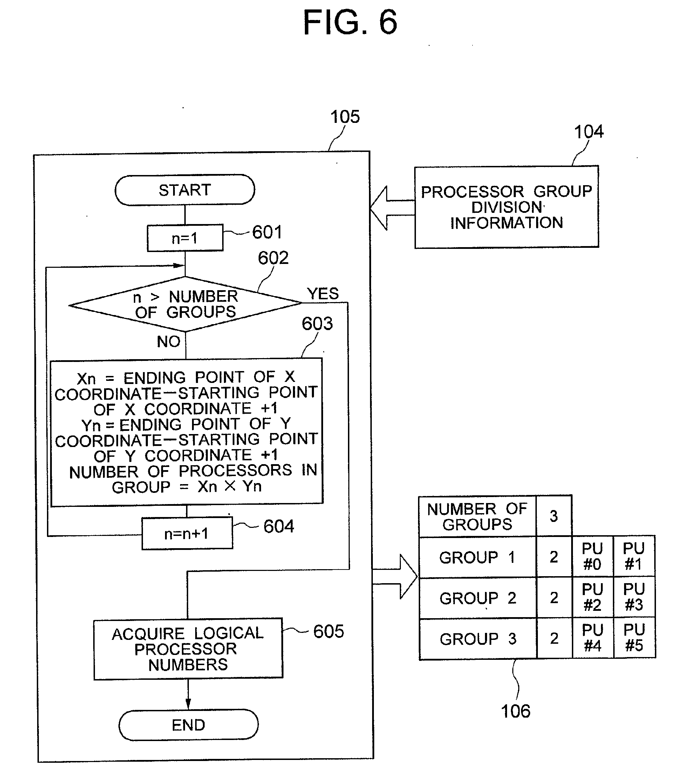

FIG. 6 is a flowchart showing the processing operation of the by-group processor counting unit 105 shown in FIG. 1. The following describes this flowchart.
(1) First, the value of the group number n is initialized to 1, and a check is made if the value n of the group number is larger than the total number of groups (steps 601 and 602).
(2) If it is found, as the result of the checking in step 602, that the value n of the group number is not larger than the total number of groups, the starting point and the ending point of the X-axis coordinate and the starting point and the ending point of the Y-axis coordinate of each group specified as the entered processor group division information 104 are checked to find the number of processors belonging to the group having the group number (step 603).
(3) After that, the value of 1 is added to the group number n, control is passed back to step 602, and processing for the next group continues (step 604).
(4) If it is found, as the result of the checking in step 602, that the value n of the group number is larger than the total number of groups, processing has been terminated for all processor groups. A logical processor number acquisition unit 605 is used to acquire the logical processor numbers of the processors belonging to each group, the result is stored in the processor group division table 106, and processing is terminated (step 605).

In the example described above, the processor group division table 106 generated as a result of processing indicates that the number of groups is three and that the number of processors belonging to group 1 is two, that is, PU#0 with the processor number 0 and PU#1 with the processor number 1. Similarly, the result indicates that the number of processors belonging to group 2 is two, that is, PU#2 with the logical processor number 2 and PU#3 with the logical processor number 3 and that the number of processors belonging to group 3 is two, that is, PU#4 with the logical processor number 4 and PU#5 with the logical processor number 5. This result matches the group division intended by the operator.

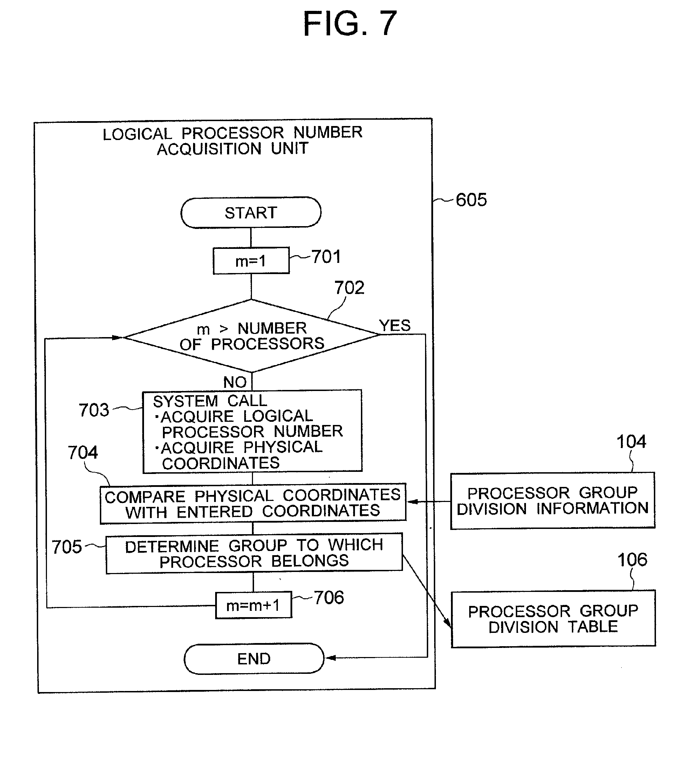

FIG. 7 is a flowchart showing the processing operation of the logical processor number acquisition unit 605. The following describes this flowchart.
(1) To determine the logical processor number of the first processor of the logical processors that will be used (six processors in this embodiment), the value of the processor number m is first initialized to 1, and a check is made if the value of the processor number m is larger than the number of processors that will be used (steps 701 and 702).
(2) If it is found, as the result of the checking in step 702, that the value m of the processor number is not larger than the number of processors that will be used, the system call provided by the operating system running on the parallel computer is executed for the processor with the processor number to acquire the logical processor number and the physical coordinates of the processor (step 703).
(3) Next, the physical coordinate number acquired by the system call is compared with the range of the coordinates of each group stored in the processor group division information 104, which was received as input data, to determine the group to which the processor belongs, and the logical processor number acquired by the system call is stored in the column of the corresponding group in the processor group division table 106 (steps 704 and 705).
(4) After that, the value of 1 is added to the value of the processor number m and control is passed back to step 702 to continue processing for the next processor. If it is found, as the result of checking in step 702, that the value m of the m-th processor is larger than the number of processors, processing has been terminated for all processors and the processing ends (step 706). This processing allows each processor to know the logical processor number of its own and other processors.

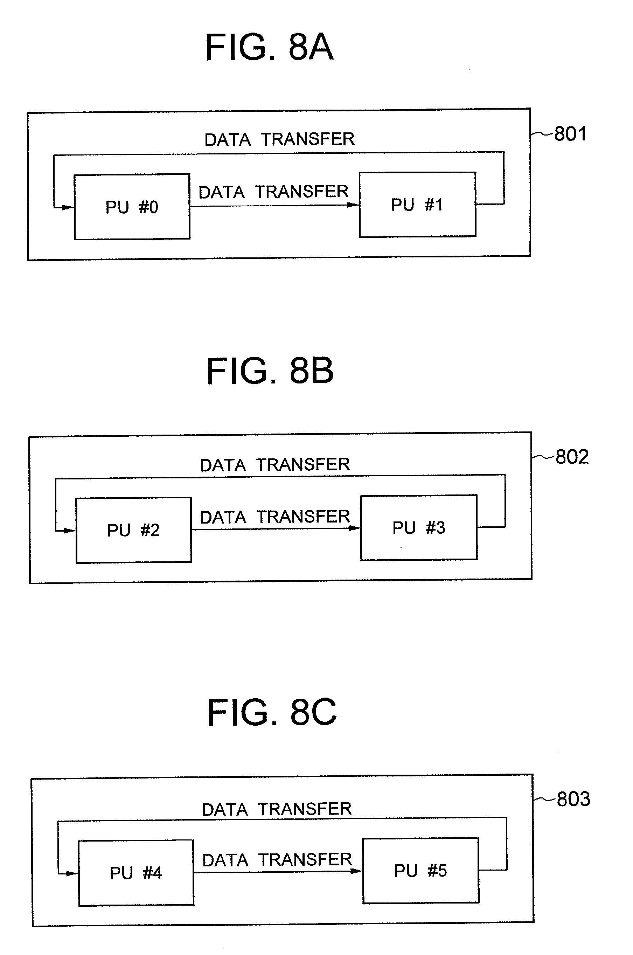

FIGS. 8A-8C are diagrams showing the processing executed the intra-group communication processor 107 shown in FIG. 1.

In FIG. 8A in which the intra-group communication processing 801 of group 1 is shown, the two processors belong to the group and therefore communication processing is performed to exchange data between logical processors PU#0 and PU#1 belonging to group 1. Processor PU#0 transfers data to processor PU#1, and processor PU#1 transfers data to processor PU#0. This completes data exchange through communication processing within group 1.

Similarly, in FIG. 8B in which the intra-group communication processing 802 of group 2 is shown, the two processors belong to the group and therefore communication processing is performed to exchange data between processors PU#2 and PU#3 belonging to group 2. That is, processor PU#2 transfers data to processor PU#3, and processor PU#3 transfers data to processor PU#2. This completes data exchange through communication processing within group 2.

In FIG. 8C in which the intra-group communication processing 803 of group 3 is shown, the two processors belong to the group and therefore communication processing is performed to exchange data between processors PU#4 and PU#5 belonging to group 3. That is, processor PU#4 transfers data to processor PU#5, and processor PU#5 transfers data to processor PU#4. This completes data exchange through communication processing within group 3.

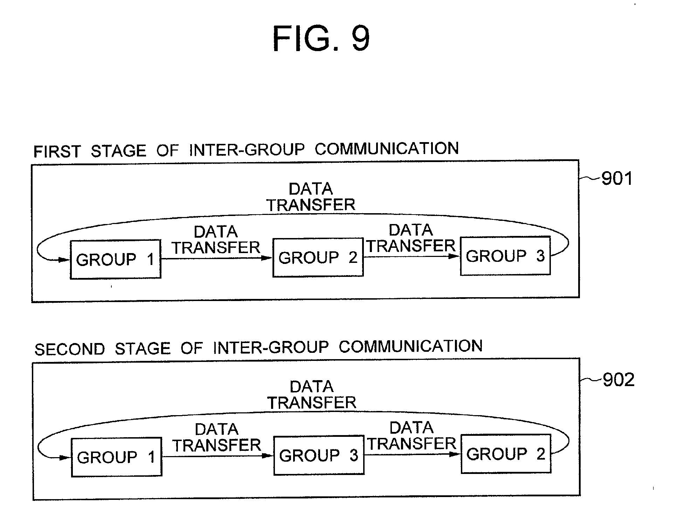

FIG. 9 is a diagram illustrating processing in the inter-group communication processor 108 shown in FIG. 1 that exchanges data among groups after completion of intra-group communication processing.

Because the six processors are divided into three groups in the embodiment of the present invention described above, the data transfer processing for exchanging data among groups is accomplished in two stages. In the first stage 901 of inter-group communication, data is transferred from group 1 to group 2, from group 2 to group 3, and from group 3 to group 1. In the second stage 902 of inter-group communication, data is transferred in a direction opposite to that described above, that is, from group 1 to group 3, from group 3 to group 2, and from group 2 to group 1. Data may be exchanged among groups through this two-stage data transfer.

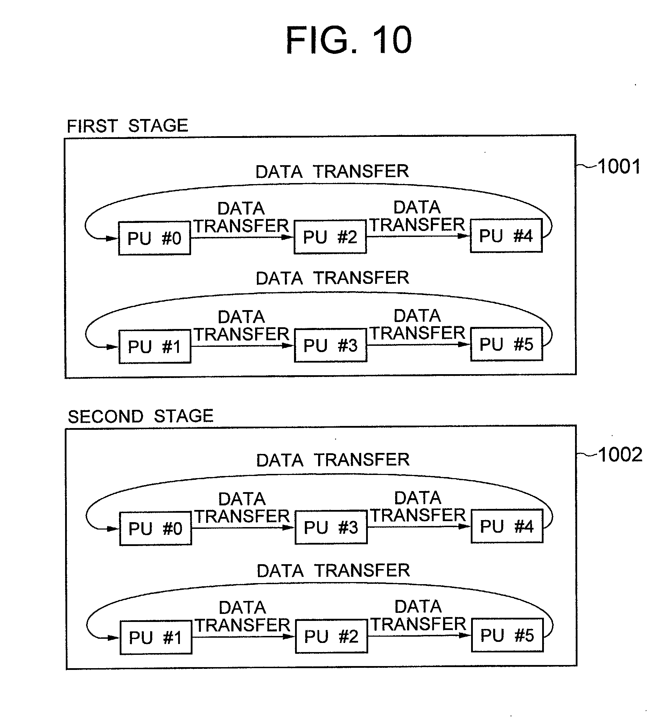

FIG. 10 is a diagram showing how data is transferred among groups in the inter-group communication processor 108 on a processor basis. The figure shows the processing of the first stage 901 of inter-group communication.

Because two processors belong to each processor group in the embodiment of the present invention described above, the first stage of data transfer among groups is accomplished by the two-stage data transfer processing. In a first stage 1001, processor PU#0 belonging to group 1 transfers data to processor PU#2 belonging to group 2, processor PU#2 belonging to group 2 transfers data to processor PU#4 belonging to group 3, and processor PU#4 belonging to group 3 transfers data to processor PU#0 belonging to group 1, respectively. Processor PU#1 belonging to group 1 transfers data to processor PU#3 belonging to group 2, processor PU#3 belonging to group 2 transfers data to processor PU#5 belonging to group 3, and processor PU#5 belonging to group 3 transfers data to processor PU#1 belonging to group 1, respectively.

In a second stage 1002, processor PU#0 belonging to group 1 transfers data to processor PU#3 belonging to group 2, processor PU#3 belonging to group 2 transfers data to processor PU#4 belonging to group 3, and processor PU#4 belonging to group 3 transfers data to processor PU#0 belonging to group 1, respectively. Processor PU#1 belonging to group 1 transfers data to processor PU#2 belonging to group 2, processor PU#2 belonging to group 2 transfers data to processor PU#5 belonging to group 3, and processor PU#5 belonging to group 3 transfers data to processor PU#1 belonging to group 1, respectively.

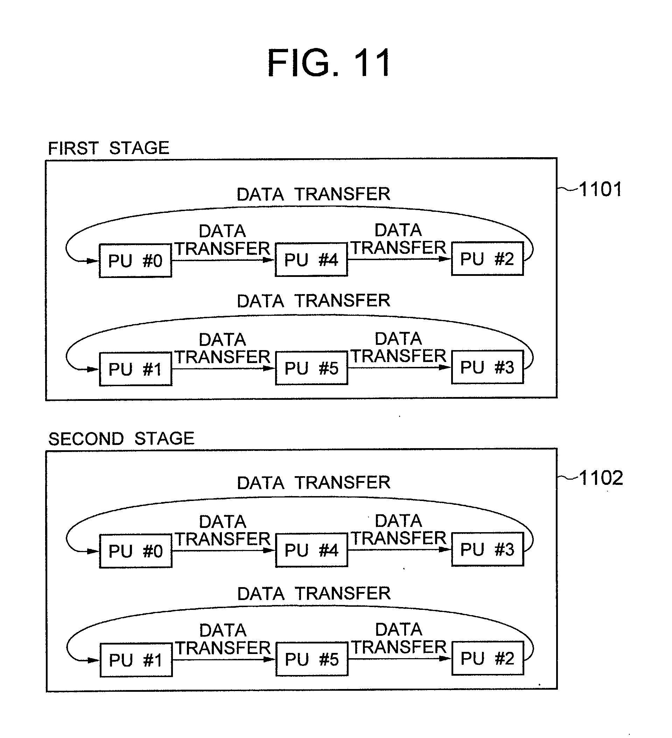

FIG. 11 is a diagram showing how data is transferred among groups in the inter-group communication processor 108 on a processor basis. The figure shows the processing of the second stage 902 of inter-group communication.

In a first stage 1101, processor PU#0 belonging to group 1 transfers data to processor PU#4 belonging to group 3, processor PU#4 belonging to group 3 transfers data to processor PU#2 belonging to group 2, and processor PU#2 belonging to group 2 transfers data to processor PU#0 belonging to group 1, respectively. Processor PU#1 belonging to group 1 transfers data to processor PU#5 belonging to group 3, processor PU#5 belonging to group 3 transfers data to processor PU#3 belonging to group 2, and processor PU#3 belonging to group 2 transfers data to processor PU#1 belonging to group 1, respectively.

In a second stage 1102, processor PU#0 belonging to group 1 transfers data to processor PU#4 belonging to group 3, processor PU#4 belonging to group 3 transfers data to processor PU#3 belonging to group 2, and processor PU#3 belonging to group 2 transfers data to processor PU#0 belonging to group 1, respectively. Processor PU#1 belonging to group 1 transfers data to processor PU#5 belonging to group 3, processor PU#5 belonging to group 3 transfers data to processor PU#2 belonging to group 2, and processor PU#2 belonging to group 2 transfers data to processor PU#1 belonging to group 1, respectively.

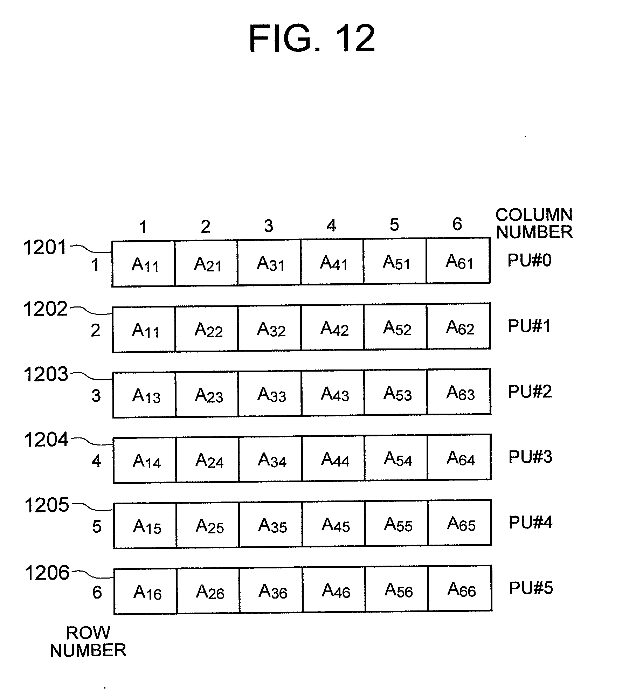

The sub-matrixes of the transposed matrix that are output as a result of all-processor to all-processor communication as described above and that are distributed among the processors of the parallel computer system are as shown in FIG. 12. That is, the first row 1201 of the matrix data is distributed to processor PU#0, the second row 1202 of the matrix data is distributed to processor PU#1, the third row 1203 of the matrix data is distributed to processor PU#2, the fourth row 1204 of the matrix data is distributed to processor PU#3, the fifth row 1205 of the matrix data is distributed to processor PU#4, and the sixth row 1206 of the matrix data is distributed to processor PU#5.

In the embodiment of the present invention described above, the transposed matrix of the entered matrix is generated. The present invention may be applied also to other matrix operations and arithmetic operations other than matrix operations.

In addition, in the embodiment of the present invention described above, a plurality of processors are divided into groups and communication is done in two stages: intra-group communication and inter-group communication. The system according to the present invention may be applied also to a configuration in which processors are divided into more stages, for example, three stages, by dividing a plurality of processors into groups and then by dividing each group into sub-groups. In this case, communication among processors in a sub-group is performed, followed by communication among processors among sub-groups, and followed by communication among processors among groups. That is, a plurality of processors used in parallel processing are divided into multiple multi-stage groups. First, communication among processors in the lowest-level group is performed, then communication among processors of different groups in the same-level is performed beginning with the groups in the next lowest level.

In the embodiment of the present invention described above, the parallel computer system is built by arranging a plurality of processors in a matrix with those processors interconnected by X-direction and Y-direction communication paths. In addition to that configuration, the present invention may be applied also to a parallel computer system in which many processors are connected to one bus-type communication path and to a parallel computer system in which many processors are arranged in a three-dimensional configuration with those processors interconnected by the X-direction, Y-direction, and Z-direction communication paths.

Because, in the embodiment of the present invention described above, the operator divides into groups the plurality of processors, which will be used in parallel calculation, based on the coordinate axes of the network, each generated group is configured as a rectangle. As a result, this rectangular group configuration allows intra-group communication processing to be executed with no conflict in the network during all-processor to all-processor communication, thus eliminating the overhead that would be generated by a transfer-data conflict on the network. Although a network conflict may occur during inter-group communication processing, high-speed communication processing is still possible because no network conflict occurs during intra-group communication processing. Another advantage is that entering processor group division information with the use of network coordinates makes the entry operation easier than that the system in the prior art that requires the operator to enter logical processor numbers.

Next, FIG. 13 shows another embodiment of the present invention. A parallel computer system 220 shown in the figure comprises a plurality of servers, server #1 130-1 and server #2 130-2, connected via an external network 134. In server #1, a plurality of CPUs (processors) 131-0 - 131-3 running under an operating system (OS) 135-1 are connected to a memory 132-1. Data communication between the memory 132-1 and the external network 134 is performed via a network interface 133-1. Similarly, in server #2, a plurality of CPUs 131-4 - 131-7 running under an OS 135-2 are connected to a memory 132-2. Data communication between the memory 132-2 and the external network 134 is performed via a network interface 133-2. It should be noted that CPU-to-CPU data transfer within the same server, which is executed not via an external network, is much faster than data transfer between CPUs in different servers.

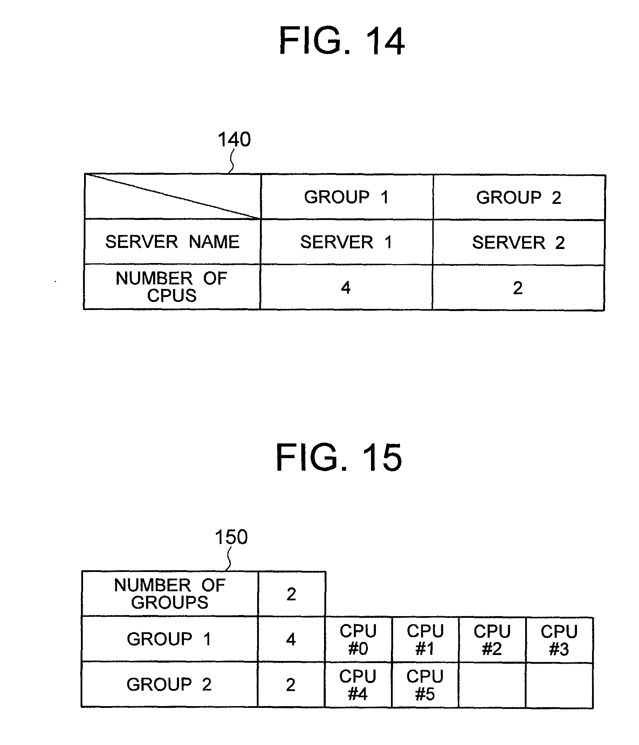

Therefore, when assigning 6 x 6 matrix data in FIG. 3 to six CPUs in the embodiment shown in FIG. 13 to calculate transposed matrix data, the operator selects four CPUs from server #1 in the parallel computer system 220 shown in FIG. 13 and assigns them as group 1 to avoid a network conflict among groups. Similarly, the operator selects two CPUs from server #2 and assigns them as group 2. As a result, processor group division information 140 shown in FIG. 14 is created and input to the CPUs.

CPU#0 - CPU#7 in the parallel computer system 220 use the entered processor group division information 140 and the server names of the processor obtained by the hostname command provided by the OS 135-1 or 135-2 to find which group each CPU belongs to and creates a processor group division table 150 such as the one shown in FIG. 15. Based on the created processor group division table 150, data communication among CPUs in the same group is performed first and then data communication among CPUs across groups is performed.

It should be further understood by those skilled in the art that the foregoing description has been made on embodiments of the invention and that various changes and modifications may be made in the invention without departing from the spirit of the invention and the scope of the appended claims, as interpreted by the description and drawings.

## Claims

1. For use in a parallel computer system (200; 220), a method for performing desired data processing using a plurality of processors (201-208; 131-0 to 131-3 and 131-4 to 131-7) connected via networks (209-212 and 213-214; 134), said method performed by each of said processors comprising the steps of:
receiving processor group division information (104: 140) into said parallel computer system, said processor group division information specifying processors belonging to each of a plurality of processor groups (Groups 1-3) which is assigned a part of the desired data processing, said processor group division information being specified using information other than logical processor numbers;
converting the received processor group division information to logical processor numbers (PU#0-PU#7: CPU#0-CPU#7) in the same group using system calls or commands provided by said parallel computer system (105);
performing data communication processing required for the desired data processing among logical processors in the same group (107);
performing data communication processing required for the desired data processing among logical processors among different groups (108); and
outputting a result of the desired data processing (120).

2. The method according to claim 1, wherein said plurality of processors are connected to nodes of the network configured like a matrix and wherein the information specified by the processor group division information includes X coordinate values and Y coordinate values of the network configured like the matrix.

3. The method according to claim 1, wherein said plurality of processors are distributed among a plurality of servers connected via the network and wherein the information specified by the processor group division information includes identification information on the servers and a number of processors used in each of the servers.

4. A parallel computer system (200: 220) comprising:
a plurality of processors (201-208: 131-0 to 131-3 and 131-4 to 131-7); and
networks (209-212 and 213-214: 134) connected to said plurality of processors,
wherein each of said processors comprises:
means (110) for receiving processor group division information (104: 140) specifying processors belonging to each of a plurality of processor groups (Groups 1-3) which is assigned a part of desired data processing, said processor group division information being specified using information other than logical processor numbers;
means (105) for converting the received processor group division information to logical processor numbers (PU#0-PU#7: CPU#0-CPU#7) in the same group using system calls or commands provided by said parallel computer system;
intra-group communication means (107) for performing data communication processing required for the desired data processing among logical processors in the same group;
inter-group communication means (108) for performing data communication processing required for the desired data processing among logical processors among different groups; and
means (120) for outputting a result of the desired data processing.

5. The parallel computer system according to claim 4, wherein said plurality of processors are connected to nodes of the network configured like a matrix and wherein the information specified by the processor group division information includes X coordinate values and Y coordinate values of the network configured like the matrix.

6. The parallel computer system according to claim 4, wherein said plurality of processors are distributed among a plurality of servers connected via the network and wherein the information specified by the processor group division information includes identification information on the servers and a number of processors used in each of the servers.

7. For use in a parallel computer system (200; 220), a method for dividing a plurality of processors (201-208; 131-0 to 131-3 and 131-4 to 131-7), which are connected via networks (209-212 and 213-214; 134), into groups according to desired data processing, said method performed by each of said processors comprising the steps of:
receiving processor group division information (104: 140) into said parallel computer system, said processor group division information specifying processors belonging to each of a plurality of processor groups (Groups 1-3) which is assigned a part of the desired data processing, said processor group division information being specified using information other than logical processor numbers; and
converting the received processor group division information to logical processor numbers (PU#0-PU#7: CPU#0-CPU#7) in the same group using system calls or commands provided by said parallel computer system (105).

8. A parallel computer system (200; 220) comprising a plurality of processors (201-208; 131-0 to 131-3 and 131-4 to 131-7) connected via networks (209-212 and 213-214; 134), each of said plurality of processors comprising:
means (110) for receiving processor group division information (104; 140) as input information, said processor group division information being information on dividing the plurality of processors, which will be used in parallel processing, into a plurality of groups;
communication processing means (107) for processing communication among processors in the same group based on the received processor group division information; and
communication processing means (108) for processing communication among processors among different groups.

9. A parallel computer system (200; 220) comprising a plurality of processors (201-208; 131-0 to 131-3 and 131-4 to 131-7) connected via networks (209-212 and 213-214; 134), each of said plurality of processors comprising:
means (110) for receiving processor group division information (104; 140) as input information, said processor group division information being information on dividing the plurality of processors, which will be used in parallel processing, into a plurality of multi-stage groups;
communication processing means (107) for processing communication among processors in a lowest-level group based on the received processor group division information; and
a plurality of communication processing means (108) for processing communication among processors among different groups in the same level.

10. The parallel computer system according to claim 8, wherein the network connecting said plurality of processors is a network composed of one bus-type communication path, a network composed of X-direction and Y-direction communication paths arranged in a matrix, or a network composed of X-direction, Y-direction, and Z-direction communication paths connecting the plurality of processors arranged in three dimensions.

11. The parallel computer system according to claim 8, wherein said plurality of processors included in each of the groups are arranged in a rectangular or a three-dimensional rectangular shape.

12. The parallel computer system according to claim 8, wherein the processor group division information is indicated by coordinate positions of the network, further comprising means for calculating processor numbers from the coordinate positions.

13. A method for communicating among processors in a parallel computer system (200; 220) comprising a plurality of processors (201-208; 131-0 to 131-3 and 131-4 to 131-7) connected via networks (209-212 and 213-214; 134), said method performed by each of said plurality of processors comprising the steps of:
receiving processor group division information (104; 140) as input information, said processor group division information being information on dividing the plurality of processors, which will be used in parallel processing, into a plurality of groups;
processing communication among processors in the same group based on the received processor group division information; and
processing communication among processors among different groups.

14. A method for communicating among processors in a parallel computer system (200; 220) comprising a plurality of processors (201-208; 131-0 to 131-3 and 131-4 to 131-7) connected via networks (209-212 and 213-214; 134), said method performed by each of said plurality of processors comprising the steps of:
receiving processor group division information (104; 140) as input information, said processor group division information being information on dividing the plurality of processors, which will be used in parallel processing, into a plurality of multi-stage groups;
processing communication among processors in a lowest-level group based on the received processor group division information; and
processing communication among processors among different groups in the same level beginning with a lowest-level group.

15. The method for communicating among processors according to claim 13, wherein the network connecting said plurality of processors is a network composed of one bus-type communication path, a network composed of X-direction and Y-direction communication paths arranged in a matrix, or a network composed of X-direction, Y-direction, and Z-direction communication paths connecting the plurality of processors arranged in three dimensions.

16. The method for communicating among processors according to claim 13, wherein said plurality of processors included in each of the groups are arranged in a rectangular or a three-dimensional rectangular shape.

17. The method for communicating among processors according to claim 13, wherein the processor group division information is indicated by coordinate positions of the network, further comprising the step of calculating processor numbers from the coordinate positions.

18. A processing program for executing the method for communicating among processors according to claim 13, comprising:
a processing program for receiving processor group division information as input information, said processor group division information being information on dividing the plurality of processors, which will be used in parallel processing, into a plurality of groups;
a processing program for processing communication among processors in the same group based on the received processor group division information;
a processing program for processing communication among processors among different groups; and
a processing program for calculating processor numbers from coordinate positions if the processor group division information is indicated by coordinate positions of the network.

19. For use in a parallel computer system (200; 220), a program for performing desired data processing using a plurality of processors (201-208; 131-0 to 131-3 and 131-4 to 131-7) connected via networks (209-212 and 213-214; 134), said program causing each of said processors to:
receive processor group division information (104: 140) into said parallel computer system, said processor group division information specifying processors belonging to each of a plurality of processor groups (Groups 1-3) which is assigned a part of the desired data processing, said processor group division information being specified using information other than logical processor numbers;
convert the received processor group division information to logical processor numbers (PU#0-PU#7: CPU#0-CPU#7) in the same group using system calls or commands provided by said parallel computer system (105);
perform data communication processing required for the desired data processing among logical processors in the same group (107);
perform data communication processing required for the desired data processing among logical processors among different groups (108); and
output a result of the desired data processing (120).
